# FASCICULE DE BREVET EUROPEEN

(11) **EP 0 445 056 B1**
(45) Date de publication et mention de la délivrance du brevet: **28.12.1994**
(21) Numéro de dépôt: 91450003.8
(22) Date de dépôt: 01.03.1991
(51) Int. Cl.: A01L 5/00

(54) **Fer à cheval**
Hufeisen
Horse shoe

(30) Priorité: 02.03.1990 FR 9002835
(43) Date de publication de la demande: 04.09.1991
(73) Titulaire: Debard, Marcel, F-12300 Decazeville (FR)
(72) Inventeur: Debard, Marcel, F-12300 Decazeville (FR)
(74) Mandataire: Ravina, Bernard

(56) Documents cités:
- EP-A- 0 013 934
- EP-A- 0 308 309
- DE-A- 2 133 205
- FR-A- 1 513 526
- FR-A- 1 566 651
- FR-A- 2 344 223
- GB-A- 1 405 211
- GB-A- 1 457 742
- US-A- 1 673 650
- US-A- 4 496 002
- US-A- 4 513 824
- US-A- 4 892 150

## Description

La présente invention concerne un fer à cheval. Elle concerne plus précisément un fer à cheval du type de ceux réalisés en résine synthétique.

Des tentatives pour remplacer le fer à cheval métallique par un fer à cheval en résine synthétique se sont produites durant les dernières décennies.

Le fer à cheval est à fixer sur le sabot du cheval ; la face supérieure du fer à cheval vient en contact avec le sabot et la face inférieure vient en contact avec le sol.

Un fer à cheval doit remplir, entre autres, les fonctions suivantes :
1- protéger le sabot du cheval en empêchant l'écaillement de la corne constitant la muraille du sabot, ceci nécessite la répartition homogène d'effort sur la sole du sabot,
2- amortir les chocs d'impact entre le sol et le sabot du cheval et empêcher ainsi la production de vibrations transmises aux os et aux articulations du cheval,
3- résister à l'abrasion,
4- avoir une robustesse suffisante, ceci pour éviter d'éventuelles cassures du fer à cheval,
5- avoir une bonne adhérence sur les différents types de sols,
6- être imperméable, ceci pour ne pas communiquer l'humidité et le purin à la sole du sabot et éviter, par conséquent, le ramollissement et la déterioration de la corne,
7- être malléable pour faciliter l'ajustage, lors de la fixation.

On connait une multitude de brevets dont le sujet est un fer à cheval réalisé en résine synthétique remplissant plus ou moins les fonctions ci-avant désignées.

On connait notamment le brevet FR 1 566 651 délivré en 1969 qui décrit un fer à cheval composé des deux plaques inférieure et supérieure, la plaque supérieure est réalisée en matière plastique dure et imperméable (polyéthylène basse pression) et la plaque inférieure est réalisée en polyuréthanne.

En effet, la plaque supérieure remplit les fonctions 1 et 6, ci-avant désignées, et la plaque inférieure remplit les fonctions 2, 3 et 5.

L'inconvénient du fer à cheval décrit par ce brevet réside dans la difficulté de la solidarisation des deux plaques, ceci vu leur nature différente.
Le résultat de cette non-solidarisation totale est le risque de déchirement puis de l'arrachement de la plaque inférieure, ceci car cette plaque inférieure en polyuréthanne adhère bien au sol tandis que son adhérence à la plaque supérieure n'est pas suffisante.
On connait également le brevet FR 1 513 526 qui décrit un fer à cheval réalisé en résine synthétique incorporant une armature malléable noyée dans la résine.
Le problème d'adhérence métal-résine pour ce fer à cheval reste toujours à résoudre.

On connaît également le brevet EP 0 308 309 qui décrit un fer à cheval comportant un insert enrobé dans une matière déformable élastiquement mais qui comporte des portions de l'insert non recouvertes et donc perméable aux impuretés.

Le but de cette invention est de proposer un fer à cheval constitué par une seule plaque ou par plus d'une plaque, remplissant à la fois, toutes les fonctions ci-avant désignées.
Un autre but de la présente invention est d'assurer dans le cas où le fer à cheval est constitué de plus d'une plaque la solidarisation totale de ces plaques.

Un autre but encore de la présente invention est de montrer que l'usage du polyuréthanne pour réaliser un fer à cheval est possible tout en assurant l'imperméabilité du dit fer.

Un autre but encore de la présente invention est de proposer un fer à cheval dont la forme est simple et semblable au fer à cheval traditionnel, ceci tout en remplissant toutes les fonctions désirées pour un fer à cheval.

Un autre but encore de la présente invention est de proposer un fer à cheval dont la fixation et la malléabilité ressemblent à ceux d'un fer à cheval traditionnel.
A cet effet, le fer à cheval selon la présente invention comportant une armature métallique noyée dans un polyuréthanne coulé se caractérise en ce que l'armature métallique est une plaque emboutie malléable qui possède un rebord et une nervure médiane noyée dans un polyuréthanne coulé dont la dureté "shore A" a au moins une valeur de 50.

Cette invention sera mieux comprise à la lecture de la description détaillée ci-après et accompagnée par dessins dans lesquels :
- la figure 1a est une vue de dessous d'un fer à cheval non conforme à l'invention, muni d'une armature décalée par rapport à la ligne médiane du dit fer à cheval,
- la figure 1b est une vue de coupe transversale d'un fer à cheval non conforme à l'invention, selon A/A de la figure 1a,
- la figure 2a est la vue de coupe transversale d'un fer à cheval non conforme à l'invention, selon B/B de la figure 1a,
- la figure 2b est la vue de coupe transversale d'un fer à cheval non conforme à l'invention composé de deux plaques,
- la figure 2c est la vue de coupe transversale d'un fer à cheval non conforme à l'invention composé de trois plaques,
- la figure 3a est la vue de coupe transversale d'un fer à cheval non conforme à l'invention muni d'une armature médiane noyée dont la section est rectangulaire,
- la figure 3b est la vue de coupe transversale d'un fer à cheval non conforme à l'invention muni d'une armature médiane noyée dont la section est circulaire,
- la figure 4a est une vue de face d'une armature médiane d'un fer à cheval non conforme à l'invention,
- la figure 4b est une vue de coupe d'un fer à cheval non conforme à l'invention selon A/A de l'armature médiane de la figure 4a.
- la figure 5a est une vue de face d'une armature médiane emboutie selon une forme préférable de l'invention,
- les figures 5b et 5c sont des vues en coupe selon A/A et B/B de la figure 5a,
- la figure 6 est une vue en coupe, comme celle de la figure 5c, mais pour un fer à cheval composé de deux plaques.

Contrairement aux renseignements du brevet FR 1 566 651 qui considère, en général, le polyuréthanne comme une matière hygroscopique, nous avons constaté que le polyuréthanne, à partir d'un certain degré de dureté, est imperméable.

En effet, le degré de dureté du polyuréthanne est corrélé à son imperméabilité, un polyuréthanne relativement dur est plus imperméable qu'un autre moins dur.

Le degré de dureté minimal du polyuréthanne à utiliser pour la réalisation d'un fer à cheval est, selon la présente invention, 50 selon l'échelle "shore A".

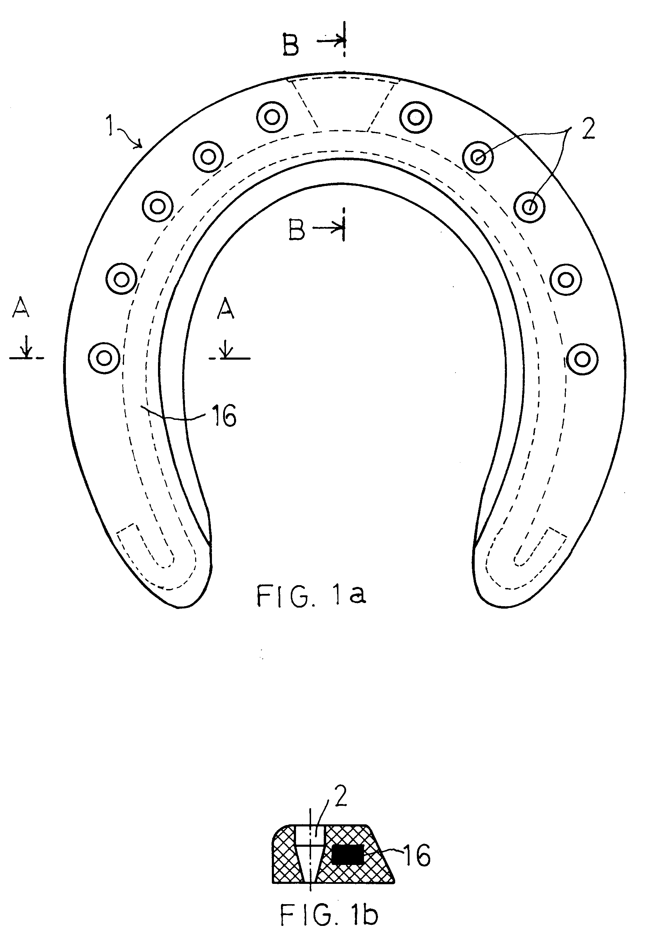

Le fer à cheval 1 (figure 1) réalisé selon la présente invention a une forme traditionnelle. Il est équipé des perçages 2 servant à la fixation sur le sabot.
Ce fer à cheval peut être, selon la présente invention, réalisé en une seule plaque ou en plusieurs plaques en polyuréthanne.
Le polyuréthanne utilisé a obligatoirement une dureté "shore A" minimale de 50.

Sur la figure (2a) est présentée la coupe transversale d'un fer à cheval réalisé en une seule plaque 3.
Le polyuréthanne utilisé peut avoir une dureté "shore A" de 50 à 100.

L'usage d'un polyuréthanne trop dur, c'est-à-dire, d'une dureté "shore A" supérieure à 100, risque de produire un fer à cheval cassable, ceci soit pendant l'usage, soit pendant l'ajustage.

Le fer à cheval dont la coupe transversale est présentée sur la figure (2b) est constitué par deux plaques 4 et 5.
La plaque inférieure 4 est d'un polyuréthanne dont la dureté "shore A" est de 50 à 60. La plaque supérieure 5 est d'un polyuréthanne dont la dureté "shore A" est de 90 à 100.
Ces deux plaques sont réalisées par deux coulages successifs dans un moule.
La plaque inférieure 4 est prévue pour amortir les vibrations.

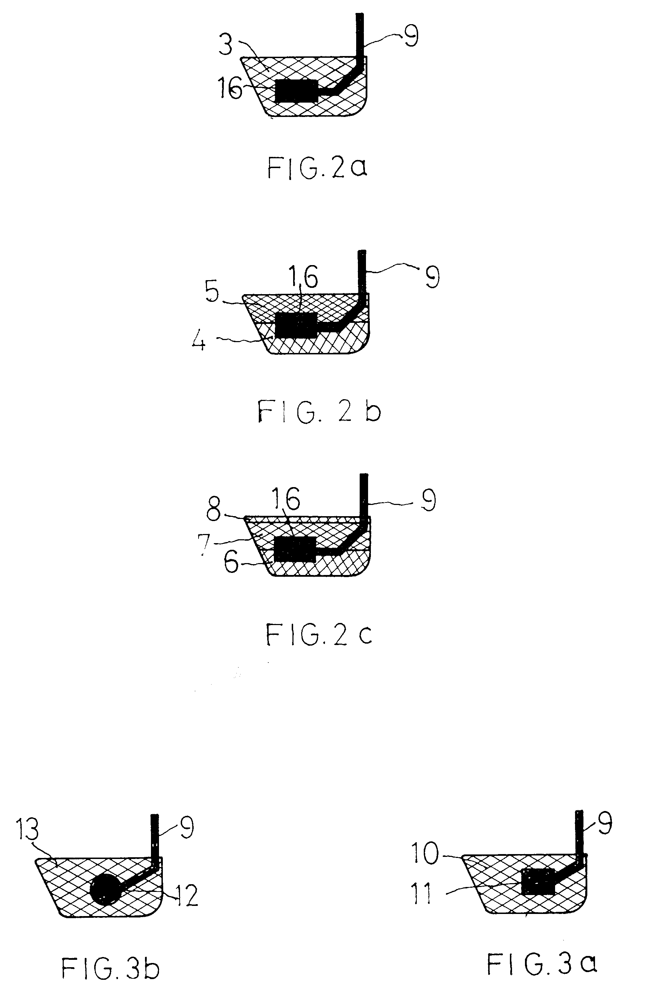

Sur la figure 2c est présentée la coupe transversale d'un fer à cheval réalisé en trois plaques inférieure 6, intermédiaire 7 et supérieure 8.
Les deux plaques inférieure et supérieure 6 et 8 sont réalisées en polyuréthanne dont la dureté "shore A" est de 50 à 60.
La plaque intermédiaire est réalisée en polyuréthanne dont la dureté est de 90 à 100 selon toujours la même échelle "shore A". ces trois plaques sont réalisées par trois coulages successifs dans un moule.
La réalisation d'un fer à cheval en plus d'une plaque par coulages successifs assure la solidarisation totale de ces plaques.

Il est à noter que le choix d'un des trois modes de réalisation, représentés dans les figures (2a), (2b) et (2c) est à définir en fonction de l'activité du cheval.
Dans ces trois figures, il est présenté un pinçon 9.
Un fer à cheval réalisé en une ou plusieurs plaques de polyuréthanne dont les duretés ont été données, reste plus ou moins élastique.
Cette élasticité est gênante lors de la fixation d'un fer à cheval sur le sabot d'un cheval.
En effet, les chevaux de même pointure possèdent des sabots dont la forme de la sole est légèrement différente.

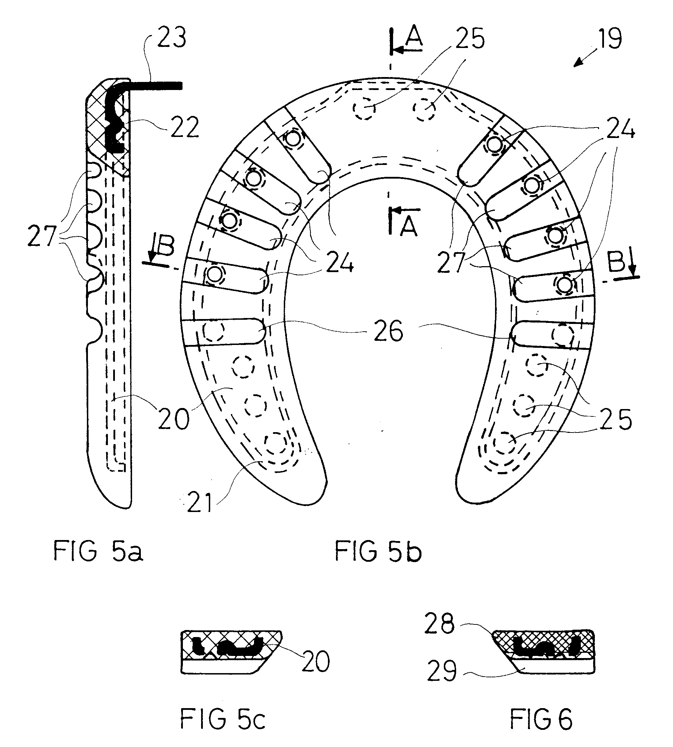

Sur la figure 5a est présenté un fer à cheval 19 selon une forme préférée de l'invention,
Ce fer à cheval est équipé d'une armature médiane 20.
Cette armature est constituée d'une feuille métallique emboutie possédant un rebord 21 et une nervure médiane 22. Elle possède également, au moins, un pinçon 23.

Des perçages 24 sont prévus pour les clous de fixation. D'autres perçages 25 sont prévus pour augmenter la solidarisation armature-polyuréthanne.
D'autres perçages 26 intermédiaires peuvent servir, selon l'appréciation, soit à la fixation soit à la solidarisation armature-polyuréthanne.

Ce fer à cheval est réalisé par coulage de polyuréthanne dont la dureté est 95 selon l'échelle "shore A".
Des rainures 27 sont prévues pour augmenter l'adhérence au sol.

Ce fer à cheval peut être réalisé par deux coulages successifs pour former deux plaques inférieure 29 et supérieure 28 (figure 6).
La plaque supérieure est plus dure que la plaque inférieure.
La plaque inférieure peut être coulée en polyuréthanne dont la dureté est de 84 selon l'échelle "shore A" et la plaque supérieure en polyuréthanne dont la dureté est de 95 selon la même échelle.

Un fer à cheval est donc éventuellement ajusté lors de la fixation.
Pour cette raison, entre autres, une armature métallique malléable peut être noyée dans la résine, ceci pendant le coulage du fer à cheval.
Cette armature a une forme de même allure que le fer à cheval concerné.
Cette armature peut être une armature médiane 11, 13 et 20 (fig.3a, 3b, 5a, 5b et 5c) ou décalée par rapport à la ligne médiane du fer à cheval, (comme l'armature 16 (fig.1a, 2a, 2b et 2c).

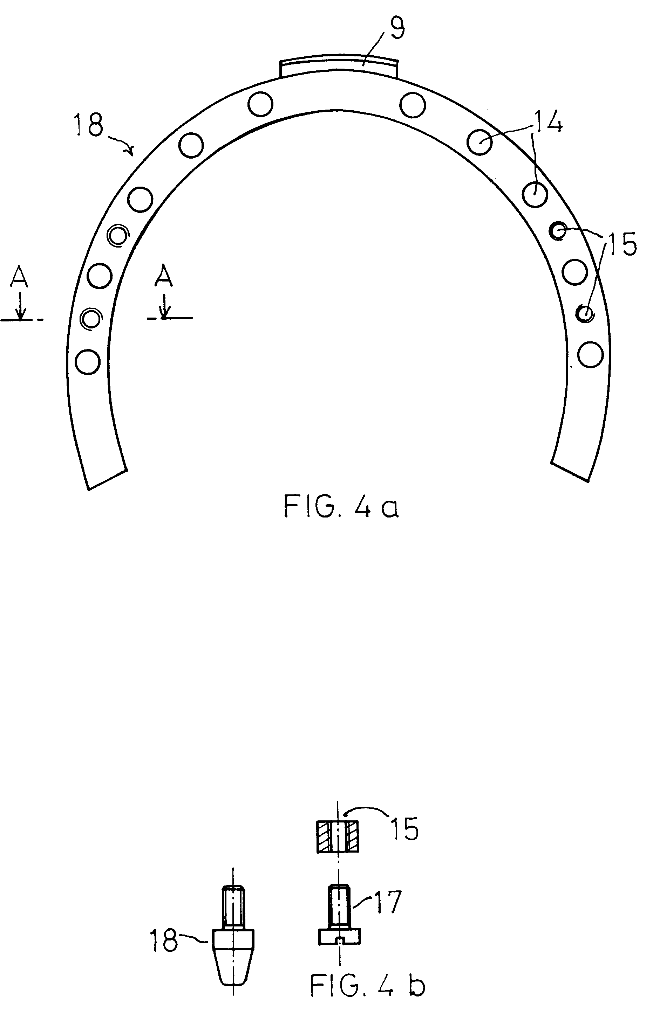

L'armature médiane 18 (fig.4a) est équipée de perçages (14) coïncidant avec ceux du fer à cheval même.
L'armature peut être d'une section ronde, rectangulaire, ou autres.
Elle est peut être solidaire d'un ou plusieurs pinçons à équiper le fer à cheval : une armature 11 (fig.3a) est solidaire du pinçon 9 équipant le fer à cheval 10, une armature 12 (fig.3b) est solidaire un pinçon 9 équipant le fer à cheval 13 et une armature 20 (fig. 5a et 5b) est solidaire d'un pinçon 23.

Cette armature médiane peut également comporter des taraudages 15 prévus pour recevoir des crampons 18.
Ces taraudages sont accessibles du côté inférieur du fer à cheval.
Normalement, un taraudage 15 est obturé par une vis 17 ne dépassant pas la surface inférieure du dit fer à cheval.

En cas de besoin, la vis 17 est enlevée et un crampon 18 fileté est installé. Ceci garde les taraudages toujours propres et prêts à recevoir les crampons.
Les crampons sont à placer sur le fer à cheval pour un usage sur un sol très glissant.
L'armature décalée par rapport à la ligne médiane peut être également solidaire d'un ou plusieurs pinçons équipant le fer à cheval ; l'armature 16 est solidaire du pinçon 9 (fig.1a, 2a, 2b et 2c).

Le polyuréthanne à utiliser pour la réalisation du fer à cheval, faisant l'objet de la présente invention, peut incorporer une charge de particules résistantes à l'abrasion dont la matière est choisie parmi le verre, la silice, la céramique ou le tungstène.
Ces particules sont ajoutées dans le polyuréthanne pour augmenter sa résistance à l'abrasation notamment dans le cas d'un polyuréthanne dont la dureté est relativement importante.

## Revendications

1. Fer à cheval comportant une armature métallique noyée dans un polyuréthanne coulé caractérisé en ce que l'armature métallique est une plaque emboutie maléable qui possède un rebord (21) et une nervure médiane noyée dans un polyuréthanne coulé dont la dureté "shore A" a au moins une valeur de 50.

2. Fer à cheval selon la revendication 1 caractérisé en ce qu'il est réalisé en une seule plaque de polyuréthanne dont la valeur minimale de dureté "shore A" est de 50.

3. Fer à cheval selon la revendication 1 caractérisé en ce qu'il est réalisé en deux plaques, l'une inférieure dont la dureté "shore A" est de 50 à 90 et l'autre supérieure dont la dureté "shore A" est de 90 à 100.

4. Fer à cheval selon la revendication 1 caractérisé en ce qu'il est réalisé en trois plaques inférieure, intermédiaire et supérieure, les plaques inférieure et supérieure ont, chacune, une dureté "shore A" de 50 à 90 et la plaque intermédiaire a une dureté "shore A" de 90 à 100.

5. Fer à cheval selon l'une quelconque des revendications 1 à 4 caractérisé en ce qu'il est équipé d'au moins un pinçon métallique ancré dans la résine synthétique.

6. Fer à cheval selon la revendication 5 caractérisé en ce que la dite armature est décalée par rapport à la ligne médiane du dit fer à cheval.

7. Fer à cheval selon la revendication 6 caractérisé en ce que la dite armature est une armature médiane munie des perçages à traverser par des clous de fixation du dit fer à chevai dans un sabot de cheval.

8. Fer à cheval selon la revendication 6 ou la revendication 7 et la revendication 5 caractérisé en ce que le(s) dit(s) pinçon(s) est (sont) solidaire(s) de la dite armature métallique.

9. Fer à cheval selon la revendication 7 caractérisé en ce que ladite armature métallique médiane est équipée de taraudages accessibles du côté inférieur du dit fer à cheval et prévus pour recevoir des crampons.

10. Fer à cheval selon l'une quelconque des revendications 1 à 9 caractérisé en ce que le polyuréthanne utilisé renferme une charge de particules résistantes à l'abrasion dont la matière est chosie parmi : le verre, la silice, la céramique ou le tungstène.

## Claims

1. Horse-shoe comprising a metal reinforcement embedded in cast polyurethane wherein said metal reinforcement is a malleable pressed plate having a rim (21) and a central rib embedded in cast polyurethane whose "shore A" hardness rating is at least 50.

2. Horse-shoe as specified in claim 1 wherein it is made from a single polyurethane plate whose minimum "shore A" hardness rating is 50.

3. Horse-shoe as specified in claim 1 wherein it is made from two plates, the lower plate having a "shore A" hardness rating Of 50 to 90 and the upper plate having a "shore A' hardness rating of 90 to 100.

4. Horse-shoe as specified in claim 1 wherein it is made from three plates, lower, middle and upper, the lower and upper plate each having a "shore A" hardness rating of 50 to 90 and the middle plate having plate having a "shore A' hardness rating of 90 to 100.

5. Horse-shoe as specified in any of the claims 1 to 4, wherein it is fitted with a metallic toe-clip anchored in the synthetic resin.

6. Horse-shoe as specified in claim 5 wherein said reinforcement is offset from the centerline of said horse-shoe.

7. Horse-shoe as specified in claim 6 wherein said reinforcement is a central reinforcement drilled with holes to accommodate the nails used to attached said horse-shoe to the horse's hoof.

8. Horse-shoe as specified in claim 6 or 7 and claim 5 wherein said toe-clip(s) is(are) joined to said metal reinforcement.

9. Horse-shoe as specified in claim 7 wherein said central metal reinforcement has bores accessible from the lower side of said horse-shoe for the purpose of accommodating studs.

10. Horse-shoe as specified in any of the claims 1 to 9 wherein the polyurethane used is loaded with abrasion-resistant particles made from any of the following matter: glass, silica, ceramic or tungsten.

## Patentansprüche

1. Hufeisen bestehend aus einem in Gießpolyurethan eingebetteten Metallbügel, dadurch gekennzeichnet, daß der Metallbügel eine biegsame, gekümpelte Platte ist, die einen nach außen gebogenen Rand (21) hat, sowie eine in Gießpolyurethan eingebettete Medianrippe, deren Shorehärte A einen Mindestwert von 50 aufweist.

2. Hufeisen nach Anspruch 1, dadurch gekennzeichnet, daß es aus einer einzigen Polyurethanplatte hergestellt ist, deren Shorehärte A einen Mindestwert von 50 aufweist.

3. Hufeisen nach Anspruch 1, dadurch gekennzeichnet, daß es aus zwei Platten besteht, einer unteren Platte, deren Shorehärte A zwischen 50 und 90 beträgt, und einer oberen Platte mit einer Shorehärte A zwischen 90 und 100.

4. Hufeisen nach Anspruch 1, dadurch gekennzeichnet, daß es aus drei Platten hergestellt ist, einer unteren, einer mittleren und einer oberen, wobei die untere und obere Platte jeweils eine Shorehärte A zwischen 50 und 90 aufweisen und die mittlere eine Shorehärte A zwischen 90 und 100.

5. Hufeisen nach einem beliebigen der vorstehend genannten Ansprüche 1 bis 4, dadurch gekennzeichnet, daß es mit mindestens einem im Kunstharz verankerten Metallclip versehen ist.

6. Hufeisen nach Anspruch 5, dadurch gekennzeichnet, daß der bekannte Bügel in Bezug auf die Mittelachse des bekannten Hufeisens versetzt ist.

7. Hufeisen nach Anspruch 6, dadurch gekennzeichnet, daß der bekannte Bügel ein Medianbügel ist, versehen mit vorgebohrten Löchern zum Einschlagen der Nägel, die das bekannte Hufeisen am Pferdehuf befestigen.

8. Hufeisen nach Anspruch 6 oder Anspruch 7 und Anspruch 5, dadurch gekennzeichnet, daß der (die) bekannte(n) Metallclip(s) und der bekannte Metallbügel aus einem Stück sind.

9. Hufeisen nach Anspruch 7, dadurch gekennzeichnet, daß der bekannte Medianbügel aus Metall mit Innengewinden versehen ist, die von der unteren Seite des bekannten Hufeisens her zugänglich sind und zum Einsetzen von Stollen bestimmt sind.

10. Hufeisen nach einem beliebigen der Ansprüche 1 bis 9, dadurch gekennzeichnet, daß das verwendete Polyurethan eine Füllung aus unverschleißbaren Teilchen einschließt, die aus folgenden Materialien ausgewählt werden können: Glas, Kieselerde, Keramik oder Wolfram.
